# EUROPEAN PATENT APPLICATION

(11) **EP 3 926 317 A1**
(43) Date of publication of application: **22.12.2021**
(21) Application number: 20756584.7
(22) Date of filing: 13.02.2020
(51) Int. Cl.: G01L 9/00

(54) **PRESSURE SENSOR**

(30) Priority: 15.02.2019 JP 2019025452
(71) Applicant: TDK Corporation, Tokyo 103-6128 (JP)
(72) Inventor: SASAHARA, Tetsuya, Tokyo 103-6128 (JP)
(74) Representative: Epping - Hermann - Fischer
(86) International application number: PCT/JP2020/005576
(87) International publication number: WO 2020/166661

(57) **Abstract**

[Problem] To provide a pressure sensor that adjusts an error of a resistance value and has proper output linear characteristics. [Solution] A pressure sensor includes a membrane that is distorted according to a pressure and a group of resistors including at least five resistors for detecting distortion and are disposed at a first distortion position where a predetermined distortion characteristic occurs on the membrane and a second distortion position where a distortion characteristic different from the first distortion position occurs. The membrane is provided with a plurality of electrode parts connected to the resistors. At least total four of the resistors, including at least two resistors disposed at the first distortion position and at least two resistors disposed at the second distortion position, are electrically connected via the electrode parts so as to constitute a Wheatstone bridge.

## Description

### Technical Field

The present invention relates to a pressure sensor that detects a strain due to deformation of a membrane by resistance change.

### Background

There is a known pressure sensor utilizing the piezoresistive effect to detect a strain of a membrane (also referred to as a diaphragm) by resistance change. In such a pressure sensor, for example, a membrane that is elastically deformed by receiving pressure is formed on a part of a metal pressure receiving member called a stem, and a strain due to a deformation of the membrane is detected by a resistance change of a resistor disposed on the membrane.

To form a resistor on a membrane, there is a known method of forming an insulating film, a metal thin film, a semiconductor thin film, or the like on the membrane and performing a screen printing or a laser processing on the formed thin film. However, the resistor formed on the membrane through such a semiconductor process may have an error (variation) from a target value in the resistance value, and a method of appropriately adjusting the error is thereby required.

To correct the resistance value of the resistor formed on the membrane, there is a proposed method of forming a correction resistor in a portion of the pressure sensor that is not affected by the deformation of the membrane (see Patent Document 1). In this technique, the error of the resistance value formed on the membrane is corrected by connecting the correction resistor to a bridge circuit as necessary.

### Prior Arts

### Patent Document

Patent Document 1: JPH1070286 (A)

### Summary of Invention

### Problems to be solved by Invention

In the conventional method of forming a correction resistor in a portion of the membrane that is not affected by deformation, a Wheatstone bridge for calculating the amount of strain includes a resistor that is not affected by strain. In the conventional pressure sensor, even if the bridge circuit is balanced while the membrane is not being deformed, the bridge circuit thereby becomes unbalanced due to the inclusion of the resistor that is not affected by strain in the bridge circuit while the pressure sensor is receiving pressure to deform the membrane. Therefore, the conventional pressure sensor has a problem that the linear characteristics are deteriorated due to the inclusion of the correction resistor in the Wheatstone bridge for calculating the amount of strain.

The present invention has been achieved under such circumstances. It is an object of the invention to provide a pressure sensor that adjusts an error of a resistance value due to manufacturing variation of a resistor formed on a membrane and has good output linear characteristics.

### Means for solving the Problem

To solve the above object, a pressure sensor according to a first aspect of the present invention comprises:
a membrane configured to produce strain corresponding to pressure; and
a resistor group including at least five resistors separately arranged at a first strain position where a predetermined strain characteristic occurs in the membrane and a second strain position where a strain characteristic different from that at the first strain position occurs and configured to detect strain,
wherein the membrane is provided with a plurality of electrode portions connected to the resistor group, and
a Wheatstone bridge is configured by electrically connecting a total of four or more resistors including at least two resistors arranged at the first strain position and at least two resistors arranged at the second strain position among the resistors included in the resistor group via the electrode portions.

In the pressure sensor according to the present invention, the number of resistors separately arranged at the first strain position and the second strain position on the membrane is five or more, and the resistors are arranged so that a surplus is generated from the minimum four required to configure the Wheatstone bridge. When a bridge circuit cannot be balanced in an attempt to configure the Wheatstone bridge by the four resistors, the pressure sensor can use the surplus resistor to adjust the resistance values. That is, the bridge circuit is configured by connecting the surplus resistor via the electrode portions arranged on the membrane so that the surplus resistor adjusts the error due to the manufacturing variation of the resistance values generated in the other resistors. Thus, the pressure sensor according to the present invention can adjust the error of the resistance values due to the manufacturing variation of the resistors formed on the membrane and can balance the bridge. Since the surplus resistor is disposed at the first strain position or the second strain position on the membrane like the other resistors, the linear characteristics of the output are favorably maintained even if the bridge circuit is configured to include the surplus resistor.

For example, at least two electrode portions may be provided for each of the resistors included in the resistor group.

In such a pressure sensor, the Wheatstone bridge can be configured by freely selecting the resistors included in the resistor group after a semiconductor manufacturing process, and there are abundant variations in circuits using the resistors. Thus, such a pressure sensor can more accurately adjust the resistance values with a small number of resistors.

For example, the pressure sensor according to the present invention may comprise a substrate portion independent from the membrane, wherein the resistors configuring the Wheatstone bridge may be electrically connected via a wiring included in the substrate portion.

The resistors configuring the Wheatstone bridge may be connected by the electrode portions and a conductor provided on the membrane, but may electrically be connected via the wiring of the substrate portion independent from the membrane. The membrane can be downsized by wiring using the substrate. In addition, the wiring structure on the membrane can be simplified, and such a pressure sensor is thereby highly productive.

For example, the wiring may be electrically connected to at least five resistors included in the resistor group, and the substrate portion may include a switch capable of switching connections between the resistors.

In the pressure sensor including such a substrate portion, the configuration of the bridge circuit can be changed by switching the switch on the substrate portion. Thus, such a pressure sensor can easily adjust the variation of the resistance values of the resistors by software or so at the time of manufacturing the pressure sensor. Even after the pressure sensor is manufactured, the configuration of the bridge circuit can be changed according to a change in the resistance values of the resistors with time, a change in other conditions, or the like.

For example, the resistor group may include a total of six or more resistors including at least three resistors arranged at the first strain position and at least three resistors arranged at the second strain position.

In such a pressure sensor, the surplus resistors are arranged at both of the first strain position and the second strain position, and the resistance values can thereby more accurately be adjusted.

A pressure sensor according to a second aspect of the present invention comprises:
a membrane configured to produce deformation corresponding to pressure;
a first resistor and a third resistor arranged at a first strain position where a predetermined strain characteristic occurs in the membrane and configured to detect strain;
a second resistor and a fourth resistor arranged at a second strain position where a strain characteristic different from that at the first strain position occurs in the membrane and configured to detect strain;
a correction resistor disposed at the first strain position or the second strain position and configured to detect strain;
a pair of correction electrode portions arranged in the membrane and connected to the correction resistor; and
at least a pair of main electrode portions arranged in the membrane and connected to the first to fourth resistors,
wherein a Wheatstone bridge is configured by the correction resistor and the first to fourth resistors connected via the correction electrode portions and the main electrode portions or by the first to fourth resistors without connecting the correction resistor.

In the pressure sensor according to the second aspect of the present invention, the correction resistor is disposed at the first strain position or the second strain position on the membrane, and the correction resistor is connected to the bridge circuit for adjustment if the bridge cannot be balanced with the Wheatstone bridge configured using first to fourth correction resistors. In such a pressure sensor, the connection path of the correction electrode portions and the main electrode portions are changed to select whether the Wheatstone bridge is configured with the correction resistor and the first to fourth resistors or the Wheatstone bridge is configured with the first to fourth resistors. Thus, the pressure sensor according to the present invention enables the correction resistor to adjust the error of the resistance values due to the manufacturing variation of the first to fourth resistors formed on the membrane and can balance the bridge. As with the first to fourth resistors, the correction resistor is disposed at the first strain position or the second strain position on the membrane, and the linear characteristics of the output are thereby favorably maintained even if the bridge circuit is configured to include the correction resistor.

A resistance value of the correction resistor may be smaller than that of any of the first to fourth resistors.

When the resistance value is configured in such a manner, the manufacturing variation of the first to fourth resistors can more favorably be adjusted by the connection of the correction resistor.

The pressure sensor according to the second aspect of the present invention may comprise a total of two or more correction resistors including the correction resistor disposed at the first strain position and the correction resistor disposed at the second strain position.

In such a pressure sensor, the resistance values of the first resistor and the third resistor can be adjusted using the correction resistor disposed at the first strain position, and the resistance values of the second resistor and the fourth resistor can be adjusted using the correction resistor disposed at the second strain position. Thus, such a pressure sensor has a wide variety of adjustments for resistance values and can more accurately adjust the resistance values with a small number of correction resistors.

### Brief Description of the Drawings

FIG. 1 is a schematic cross-sectional view of a pressure sensor according to First Embodiment of the present invention;
FIG. 2 is a conceptual diagram illustrating an arrangement of resistors in the pressure sensor according to First Embodiment;
FIG. 3 is a conceptual diagram illustrating a configuration example (first configuration example) of the Wheatstone bridge formed in the pressure sensor according to First Embodiment;
FIG. 4 is a conceptual diagram illustrating a configuration example (second configuration example) of the Wheatstone bridge formed in the pressure sensor according to First Embodiment;
FIG. 5 is a conceptual diagram illustrating a configuration example (third configuration example) of the Wheatstone bridge formed in the pressure sensor according to First Embodiment;
FIG. 6 is a conceptual diagram illustrating a configuration example (fourth configuration example) of the Wheatstone bridge formed in the pressure sensor according to First Embodiment;
FIG. 7 is a conceptual diagram illustrating a configuration example (fifth configuration example) of the Wheatstone bridge formed in the pressure sensor according to First Embodiment;
FIG. 8 is a conceptual diagram illustrating a configuration example (sixth configuration example) of the Wheatstone bridge formed in the pressure sensor according to First Embodiment;
FIG. 9 is a conceptual diagram illustrating a configuration example (seventh configuration example) of the Wheatstone bridge formed in the pressure sensor according to First Embodiment;
FIG. 10 is a conceptual diagram illustrating an arrangement of resistors and a substrate portion in a pressure sensor according to Second Embodiment;
FIG. 11 is a conceptual diagram illustrating a configuration example (eighth configuration example) of the Wheatstone bridge formed in the pressure sensor according to Second Embodiment;
FIG. 12 is a conceptual diagram illustrating a configuration example (ninth configuration example) of the Wheatstone bridge formed in the pressure sensor according to Second Embodiment;
FIG. 13 is a conceptual diagram illustrating a configuration example (10th configuration example) of the Wheatstone bridge formed in a pressure sensor according to Third Embodiment;
FIG. 14 is a conceptual diagram illustrating a configuration example (11th configuration example) of the Wheatstone bridge formed in the pressure sensor according to Third Embodiment;
FIG. 15 is a conceptual diagram illustrating configuration examples (12th configuration example and 13th configuration example) of the Wheatstone bridge formed in a pressure sensor according to Fourth Embodiment; and
FIG. 16 is a conceptual diagram comparing the characteristics of the pressure sensors between the prior art and First Embodiment.

### Detailed Description of Invention

Hereinafter, the present invention is described based on the embodiments shown in the figures.

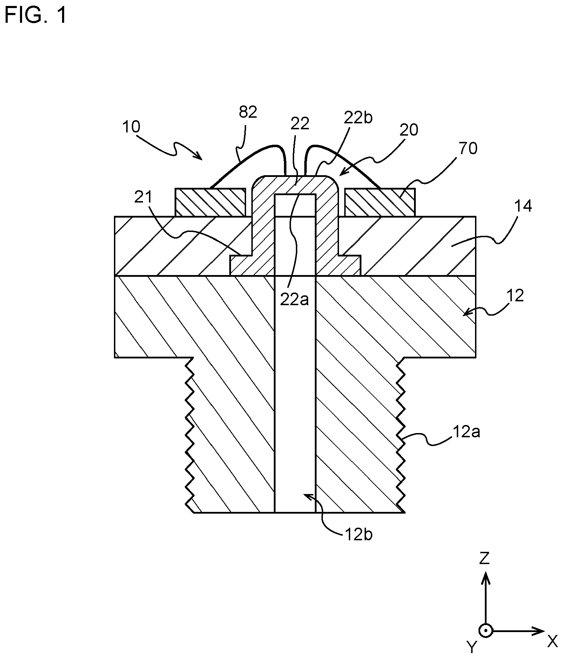

FIG. 1 is a schematic cross-sectional view of a pressure sensor 10 according to the present invention. The pressure sensor 10 includes a stem 20 having a membrane 22, a connection member 12 provided with a passage 12b for transmitting pressure to the stem 20, a holding member 14 for fixing the stem 20 to the connection member 12, an a substrate portion 70 wired to an electrode portion on the membrane 22, and the like.

As shown in FIG. 1, a screw groove 12a for fixing the pressure sensor 10 to a measurement target is formed on the outer periphery of the connection member 12. Since the pressure sensor 10 is fixed by the screw groove 12a, the passage 12b formed inside the connection member 12 airtightly communicates with a pressure chamber as the measurement target.

As shown in FIG. 1, the stem 20 has a bottomed (upper bottom) tubular outer shape and is disposed at one end of the passage 12b of the connection member 12. The stem 20 is provided with a flange portion 21 on the opening side and is fixed to the connection member 12 by sandwiching the flange portion 21 between the holding member 14 and the connection member 12. The opening of the stem 20 and the passage 12b of the connection member 12 are airtightly connected using the holding member 14, and the pressure to be measured is transmitted to the membrane 22 of the stem 20.

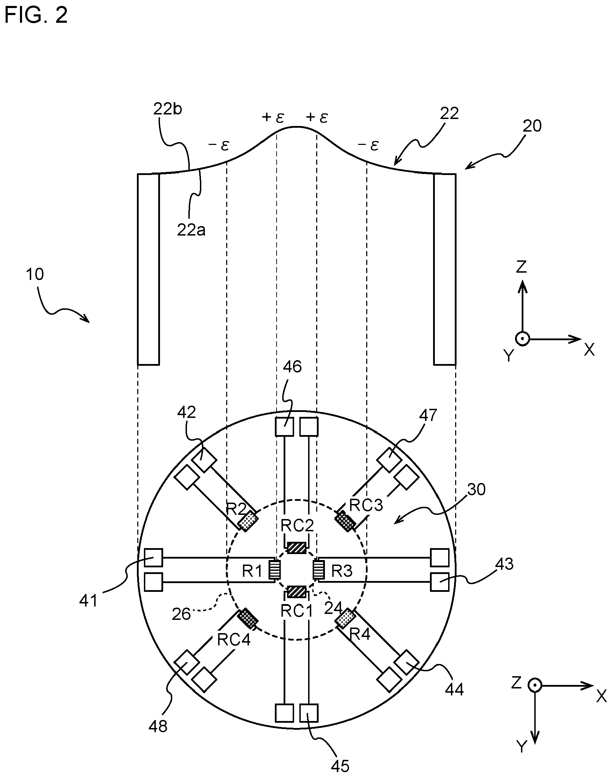

The membrane 22 is disposed on the upper bottom of the stem 20. The membrane 22 is thinner than other parts of the stem 20, such as the side wall, and is deformed corresponding to the pressure transmitted from the passage 12b. The membrane 22 includes an inner surface 22a configured to contact with a pressure fluid and an outer surface 22b opposite to the inner surface 22a. A resistor group 30 (see FIG. 2), electrode portions, and the like are arranged on the outer surface 22b side of the membrane 22.

The substrate portion 70 having, for example, a wiring electrically connected to the resistor group 30 formed on the outer surface 22b of the membrane 22 is fixed to the holding member 14. The electrode portion of the substrate portion 70 and the resistor group 30 are electrically connected via, for example, a connection wiring 82 formed by wire bonding or so. The substrate portion 70 has a ring outer shape. The stem 20 inserts a through hole formed at the center of the substrate portion 70.

FIG. 2 is a conceptual diagram illustrating an arrangement state of the resistor group 30 on the outer surface 22b of the membrane 22. The upper part of FIG. 2 is a schematic cross-sectional view of the stem 20, and the lower part of FIG. 2 is a schematic plan view of the stem 20 viewed from the positive side in the Z-axis direction, which is the outer surface 22b side of the membrane 22.

As shown in FIG. 2, the resistor group 30 including a first resistor R1, a second resistor R2, a third resistor R3, a fourth resistor R4, a first correction resistor RC1, a second correction resistor RC2, a third correction resistor RC3, and a fourth correction resistor RC4, which are resistors for detecting strain, is provided on the outer surface 22b of the membrane 22. The resistors R1-R4 and RC1-RC4 are separately arranged on a first circumference 24, which is a first strain position that produces a predetermined strain characteristic responding to the pressure applied to the inner surface 22a of the membrane 22, and a second circumference 26, which is a second strain position that produces a strain characteristic different from that at the first strain position.

As shown in FIG. 2, the first circumference 24 is a circumference of a circle having a radius smaller than that of the second circumference 26. For example, when the membrane 22 receives a predetermined positive pressure from the inner surface 22a, a positive strain + ε (tensile strain) is generated on the first circumference 24, but a negative strain - ε (compressive strain) is generated on the second circumference 26. Preferably, the strain characteristic on the first circumference 24 (the first strain position) and the strain characteristic on the second circumference 26 (the second strain position) are in opposite directions (relation canceling each other).

Among the resistors R1-R4 and RC1-RC4 included in the resistor group 30, the first resistor R1, the third resistor R3, the first correction resistor RC1, and the second correction resistor RC2 are arranged on the first circumference 24. On the other hand, among the resistors R1-R4 and RC1-RC4 included in the resistor group 30, the second resistor R2, the fourth resistor R4, the third correction resistor RC3, and the fourth correction resistor RC4 are arranged on the second circumference 26.

A plurality of electrode portions connected to the resistor group 30 is provided on the outer surface 22b of the membrane 22. The electrode portions include a main electrode portion 41 connected to the first resistor R1, a main electrode portion 42 connected to the second resistor R2, a main electrode portion 43 connected to the third resistor R3, a main electrode portion 44 connected to the fourth resistor R4, a correction electrode portion 45 connected to the first correction resistor RC1, a correction electrode portion 46 connected to the second correction resistor RC2, and a correction electrode portion 47 connected to the third correction resistor RC3, and a correction electrode portion 48 connected to the fourth correction resistor RC4.

Preferably, at least two electrode portions are provided for each of the resistors R1-R4 and RC1-RC4 included in the resistor group 30. In the embodiment shown in FIG. 2, two electrode portions are provided for each of the resistors R1-R4 and RC1-RC4. As described below, however, it is sufficient that the electrode portions are provided so as to cause variations in the connection method at the time of configuring the Wheatstone bridge, and the electrode portions are not necessarily provided for each of the resistors R1-R4 and RC1-RC4. For example, the electrode portions of the pressure sensor according to a modified example may include a pair of correction electrode portions 45 connected to the first correction resistor RC1 and a pair of main electrode portions connected to the first to fourth resistors R1-R4. In such a modification, the first to fourth resistors R1-R4 are wired to each other on the membrane 22 without interposing electrode portions.

The electrode portions 41-48 are conducted with the corresponding resistors R1-R4 and RC1-RC4, and conducting wires for wiring to the corresponding resistors R1-R4 and RC1-RC4 can be fixed to the electrode portions 41-48. The electrode portions 41-48 are formed along a circumference having a radius larger than that of the second circumference 26. This facilitates wiring from the electrode portions 41-48 to the substrate portion 70. However, the electrode portions 41-48 are arranged in any manner and can be arranged with various shapes on the membrane 22.

The stem 20 having the membrane 22 as shown in FIG. 2 and the resistor group 30 and the electrode portions 41-48 arranged on the membrane 22 are manufactured, for example, as follows. First, the stem 20 having the membrane 22 is manufactured by machining. The stem 20 is made of any material that generates an appropriate elastic deformation and is made of, for example, metals or alloys, such as stainless steel.

Next, a semiconductor thin film or a metal thin film is formed on the membrane 22 with an insulating film interposed therebetween, and the resistor group 30 and the electrode portions 41-48 as shown in FIG. 2 are formed by subjecting this thin film to laser processing, fine processing with semiconductor processing technique, such as screen printing, or the like. If necessary, an insulating surface layer may be formed on a portion other than the electrode portions 41-48, such as the resistor group 30 and the wiring portion between the resistor group 30 and the electrode portions 41-48.

The pressure sensor 10 is manufactured by electrically connecting a total of four or more resistors among the resistors R1-R4 and RC1-RC4 included in the resistor group 30 shown in FIG. 2 via the electrode portions 41-48 so as to configure a Wheatstone bridge. As described below, the resistors configuring the Wheatstone bridge include the first resistor R1 and the third resistor R3, which are at least two resistors arranged on the first circumference 24, and the second resistor R2 and the fourth resistor R4, which are at least two resistors arranged on the second circumference 26.

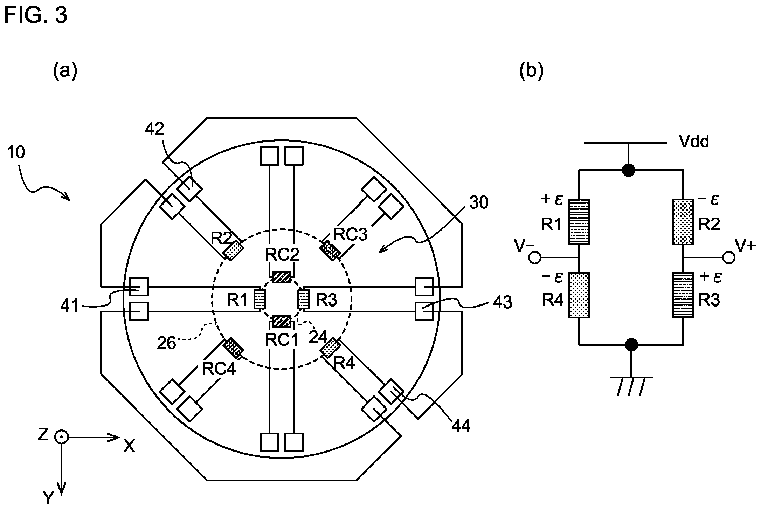

FIG. 3 is a conceptual diagram illustrating a configuration example (first configuration example) of the Wheatstone bridge formed in the pressure sensor 10. FIG. 3A illustrates a connection state of the electrode portions 41-48, and FIG. 3B illustrates a circuit formed by the resistor group 30 in the connection state shown in FIG. 3A. In the first configuration example, as shown in FIG. 3A, the main electrode portion 41 and the main electrode portion 42, the main electrode portion 42 and the main electrode portion 43, the main electrode portion 43 and the main electrode portion 44, and the main electrode portion 44 and the main electrode portion 41 are connected to each other to form a Wheatstone bridge. That is, the Wheatstone bridge in the first configuration example is configured by the first to fourth resistors R1-R4 without connecting the correction resistors RC1-RC4.

Moreover, a pressure detection circuit including the Wheatstone bridge as shown in FIG. 3B is formed by electrically connecting the main electrode portions 41-44 to the substrate portion 70 shown in FIG. 1 via a connection wiring 82. Such a Wheatstone bridge configuration is employed when, for example, resistance values of the first to fourth resistors R1-R4 are measured after forming the resistor group 30 shown in FIG. 2 in the semiconductor manufacturing process and before wiring the main electrode portions 41-44 or so and all correspond with target values or slightly deviate therefrom.

The connections of the electrode portions 41-48 shown in FIG. 3A and the formation of the connection wiring 82 shown in FIG. 1 are carried out using a method of, for example, wire bonding. In FIG. 3A, the connections of the electrode portions 41-48 are illustrated in a plane manner for easy explanation, but the electrode portions 41-48 are preferably three-dimensionally connected on the membrane 22.

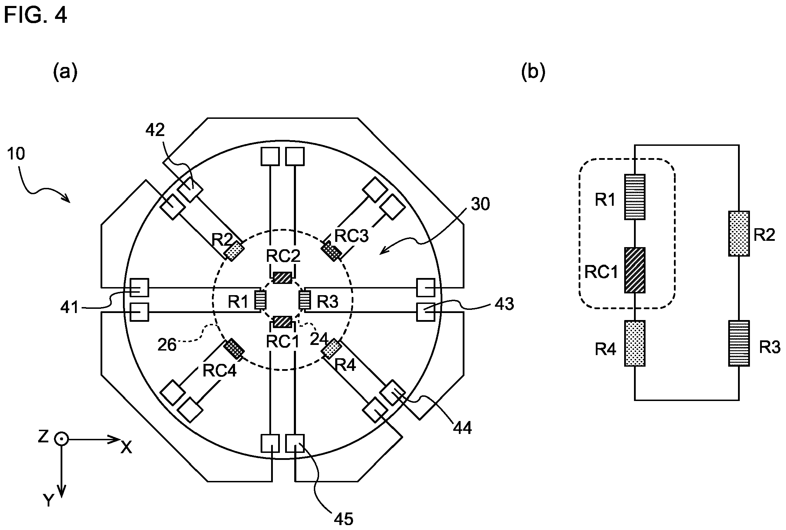

Unlike the case of adopting the first configuration example, a configuration different from that shown in FIG. 3 is adopted when resistance values of the first to fourth resistors R1-R4 are measured to find that the resistance value of any of the first to fourth resistors R1-R4 greatly deviates from its target value. FIG. 4 is a conceptual diagram illustrating another configuration example (second configuration example) of the Wheatstone bridge formed by the pressure sensor 10. FIG. 4A illustrates a connection state of the electrode portions 41-48, and FIG. 4B illustrates a circuit formed by the resistor group 30 in the connection state shown in FIG. 4A.

In the second configuration example, as shown in FIG. 4A, the main electrode portion 41 and the main electrode portion 42, the main electrode portion 42 and the main electrode portion 43, the main electrode portion 43 and the main electrode portion 44, the main electrode portion 44 and the correction electrode portion 45, and the correction electrode portion 45 and the main electrode portion 41 are connected to each other to form a Wheatstone bridge. That is, the Wheatstone bridge in the second configuration example is configured by the first correction resistor RC1 and the first to fourth resistors R1-R4 connected via the correction electrode portion 45 and the main electrode portions 41-44.

In the Wheatstone bridge of the second configuration example, as shown by the dotted line frame in FIG. 4B, the first correction resistor RC1 is connected in series to the first resistor R1. Such a Wheatstone bridge configuration is adopted, for example, resistance values of the first to fourth resistors R1-R4 are measured before wiring the main electrode portions 41-44 to find that only the resistance value of the first resistor R1 is smaller than its target value. In the Wheatstone bridge of the second configuration example, the first correction resistor RC1 is connected in series to the first resistor R1, and the resistance value of the first resistor R1 is thereby corrected to the side where the resistance value of the first resistor R1 increases. Although not illustrated in FIG. 4B, the bridge circuit shown in FIG. 4A and FIG. 4B is wired to the substrate portion 70 and applied with voltage as in the first configuration example shown in FIG. 3B.

When the resistance value of the first resistor R1 is corrected, among the correction resistors RC1-RC4, the correction resistors RC1 and RC2 arranged on the first circumference 24 as with the first resistor R1 are used. As a result, the balance of the bridge is maintained even if distortion occurs, and the output of the pressure sensor 10 has good linear characteristics. The electrode portions 41-48 and the substrate portion 70 are wired as in the first configuration example.

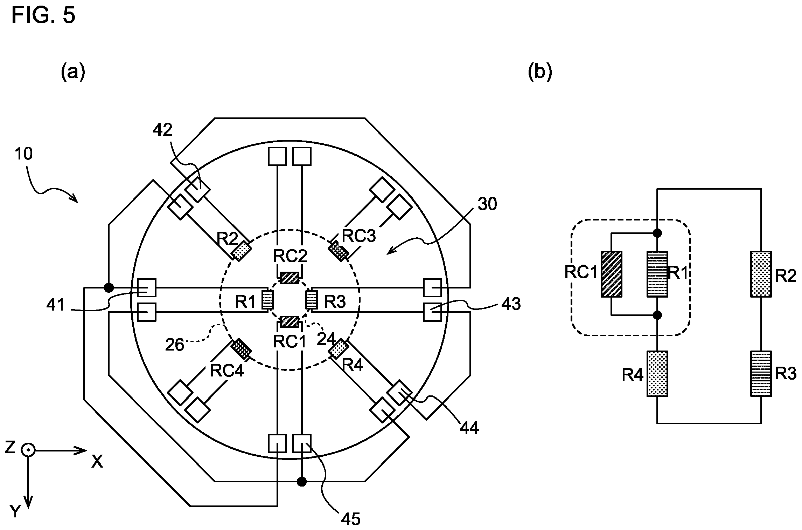

FIG. 5 is a conceptual diagram illustrating another configuration example (third configuration example) of the Wheatstone bridge formed in the pressure sensor 10. FIG. 5A illustrates a connection state of the electrode portions 41-48, and FIG. 5B illustrates a circuit formed by the resistor group 30 in the connection state shown in FIG. 5A.

In the third configuration example, as shown in FIG. 5A, the main electrode portion 41 and the main electrode portion 42, the main electrode portion 42 and the main electrode portion 43, the main electrode portion 43 and the main electrode portion 44, the main electrode portion 44, the correction electrode portion 45, and the main electrode portion 41, and the correction electrode portion 45 and the main electrode portion 41 are connected to each other to form a Wheatstone bridge. That is, as in the second configuration example (see FIG. 4A), the Wheatstone bridge in the third configuration example is configured by the first correction resistor RC1 and the first to fourth resistors R1-R4 connected via the correction electrode portion 45 and the main electrode portions 41-44.

In the Wheatstone bridge of the third configuration example, however, as shown by the dotted line frame in FIG. 5B, the first correction resistor RC1 is connected in parallel to the first resistor R1. Such a Wheatstone bridge configuration is adopted, for example, when resistance values of the first to fourth resistors R1-R4 are measured before wiring the main electrode portions 41-44 to find that only the resistance value of the first resistor R1 is larger than its target value. In the Wheatstone bridge of the third configuration example, the first correction resistor RC1 is connected in parallel to the first resistor R1, and the resistance value of the first resistor R1 is thereby corrected to the side where the resistance value of the first resistor R1 decreases. When the resistance value of the first resistor R1 is corrected, the first correction resistor RC1 disposed on the first circumference 24 is used. This is the same as the second configuration example. Although not illustrated in FIG. 5B, the bridge circuit shown in FIG. 5A and FIG. 5B is wired to the substrate portion 70 and applied with voltage as in the first configuration example shown in FIG. 3B.

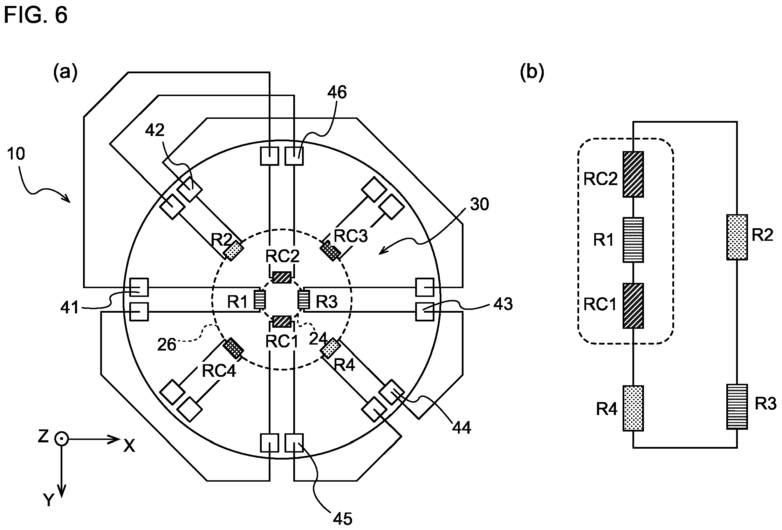

FIG. 6 is a conceptual diagram illustrating another configuration example (fourth configuration example) of the Wheatstone bridge formed in the pressure sensor 10. FIG. 6A illustrates a connection state of the electrode portions 41-48, and FIG. 6B illustrates a circuit formed by the resistor group 30 in the connection state shown in FIG. 6A.

In the fourth configuration example, as shown in FIG. 6A, the main electrode portion 41 and the correction electrode portion 46, the correction electrode portion 46 and the main electrode portion 42, the main electrode portion 42 and the main electrode portion 43, the main electrode portion 43 and the main electrode portion 44, the main electrode portion 44 and the correction electrode portion 45, and the correction electrode portion 45 and the main electrode portion 41 are connected to each other to form a Wheatstone bridge. That is, the Wheatstone bridge in the fourth configuration example is configured by the first and second correction resistors RC1 and RC2 and the first to fourth resistors R1-R4 connected via the correction electrode portions 45 and 46 and the main electrode portions 41-44.

In the Wheatstone bridge of the fourth configuration example, as shown by the dotted line frame in FIG. 6B, the first correction resistor RC1 and the second correction resistor RC2 are connected in series to the first resistor R1. Such a Wheatstone bridge configuration is adopted, for example, when the resistance values of the first to fourth resistors R1-R4 are measured before wiring the main electrode portions 41-44 to find that only the resistance value of the first resistor R1 is smaller than its target value and more greatly deviates therefrom than in the case of adopting the second configuration example. In the Wheatstone bridge of the fourth configuration example, the first and second correction resistors RC1 and RC2 are connected in series to the first resistor R1, and the resistance value of the first resistor R1 is thereby corrected to the side where the resistance value of the first resistor R1 increases. When the resistance value of the first resistor R1 is corrected, the first and second correction resistors RC1 and RC2 arranged on the first circumference 24 are used. This is the same as the second and third configuration examples. Although not illustrated in FIG. 6B, the bridge circuit shown in FIG. 6A and FIG. 6B is wired to the substrate portion 70 and applied with voltage as in the first configuration example shown in FIG. 3B.

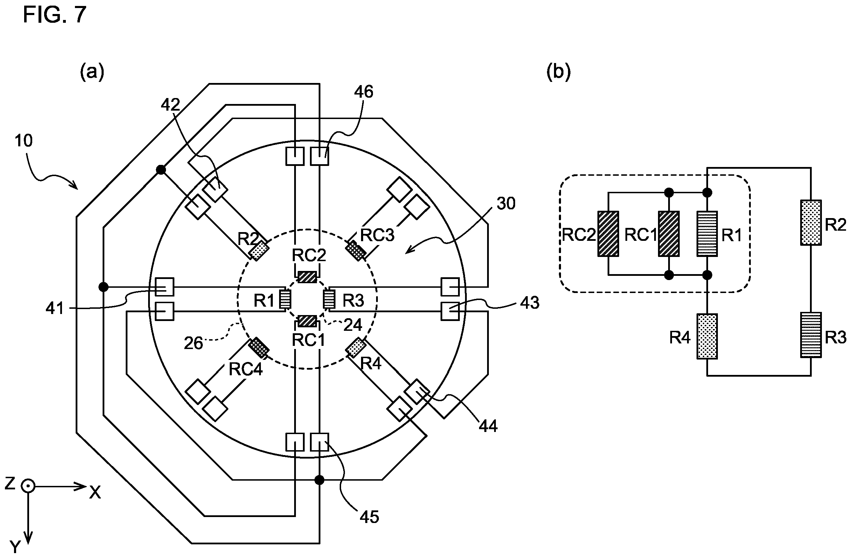

FIG. 7 is a conceptual diagram illustrating another configuration example (fifth configuration example) of the Wheatstone bridge formed in the pressure sensor 10. FIG. 7A illustrates a connection state of the electrode portions 41-48, and FIG. 7B illustrates a circuit formed by the resistor group 30 in the connection state shown in FIG. 7A.

In the fifth configuration example, as shown in FIG. 7A, the main electrode portion 41, the correction electrode portion 46, and the main electrode portion 42, the main electrode portion 42 and the correction electrode portion 46, the main electrode portion 42 and the main electrode portion 43, the main electrode portion 43 and the main electrode portion 44, the main electrode portion 44, the correction electrode portion 45, and the main electrode portion 41, and the correction electrode portion 45 and the main electrode portion 41 are connected to form a Wheatstone bridge. That is, as in the fourth configuration example, the Wheatstone bridge in the fifth configuration example is configured by the correction resistors RC1 and RC2 and the first to fourth resistors R1-R4 connected via the correction electrode portions 45 and 46 and the main electrode portions 41-44.

In the Wheatstone bridge of the fifth configuration example, however, as shown by the dotted line frame in FIG. 7B, the first correction resistor RC1 and the second correction resistor RC2 are connected in parallel to the first resistor R1. Such a Wheatstone bridge configuration is adopted, for example, when resistance values of the first to fourth resistors R1-R4 are measured before wiring the main electrodes 41-44 to find that only the resistance value of the first resistor R1 is larger than its target value and more greatly deviates therefrom than in the case of adopting the third configuration example. In the Wheatstone bridge of the fifth configuration example, the correction resistors RC1 and RC2 are connected in parallel to the first resistor R1, and the resistance value of the first resistor R1 is thereby corrected to the side where the resistance value of the first resistor R1 decreases. When the resistance value of the first resistor R1 is corrected, the correction resistors RC1 and RC2 arranged on the first circumference 24 are used. This is also the same as the second to fourth configuration examples. Although not illustrated in FIG. 7B, the bridge circuit shown in FIG. 7A and FIG. 7B is wired to the substrate portion 70 and applied with voltage as in the first configuration example shown in FIG. 3B.

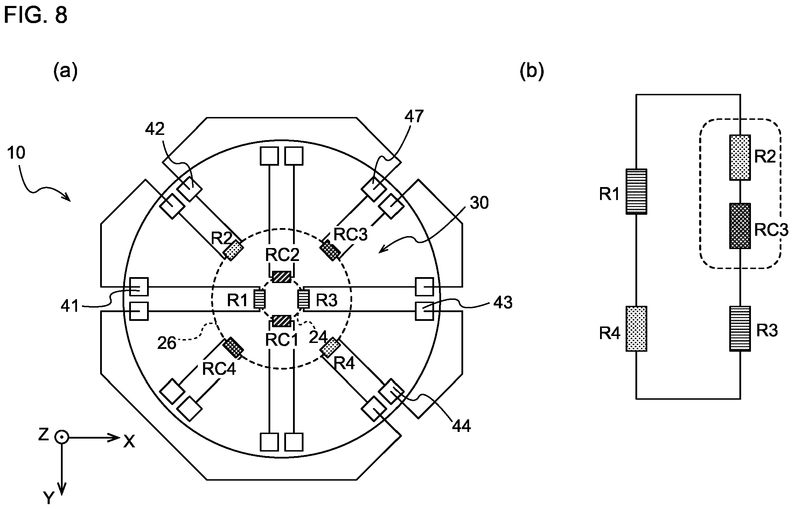

FIG. 8 is a conceptual diagram illustrating another configuration example (sixth configuration example) of the Wheatstone bridge formed in the pressure sensor 10. FIG. 8A illustrates a connection state of the electrode portions 41-48, and FIG. 8B illustrates a circuit formed by the resistor group 30 in the connection state shown in FIG. 8A.

In the sixth configuration example, as shown in FIG. 8A, the main electrode portion 41 and the main electrode portion 42, the main electrode portion 42 and the correction electrode portion 47, the correction electrode portion 47 and the main electrode portion 43, the main electrode portion 43 and the main electrode part 44, and the main electrode part 44 and the main electrode part 41 are connected to each other to form a Wheatstone bridge. That is, the Wheatstone bridge in the sixth configuration example is configured by the third correction resistor RC3 and the first to fourth resistors R1-R4 connected via the correction electrode portion 47 and the main electrode portions 41-44.

In the Wheatstone bridge of the sixth configuration example, as shown by the dotted line frame in FIG. 8B, the third correction resistor RC3 is connected in series to the second resistor R2. Such a Wheatstone bridge configuration is adopted, for example, when resistance values of the first to fourth resistors R1-R4 are measured before wiring the main electrode portions 41-44 to find that only the resistance value of the second resistors R2 is smaller than its target value. In the Wheatstone bridge of the sixth configuration example, the third correction resistor RC3 is connected in series to the second resistor R2, and the resistance value of the second resistor R2 is thereby corrected to the side where the resistance value of the second resistor R2 increases. Although not shown in FIG. 8B, the bridge circuit shown in FIG. 8A and FIG. 8B is wired to the substrate portion 70 and applied with voltage as in the first configuration example shown in FIG. 3B.

As shown in FIG. 8B, when the resistance value of the second resistor R2 is corrected, among the correction resistors RC1-RC4, the third and fourth correction resistors RC3 and RC4 arranged on the second circumference 26 as with the second resistor R2 are used. As a result, the balance of the bridge is maintained even if distortion occurs, and the output of the pressure sensor 10 has good linear characteristics.

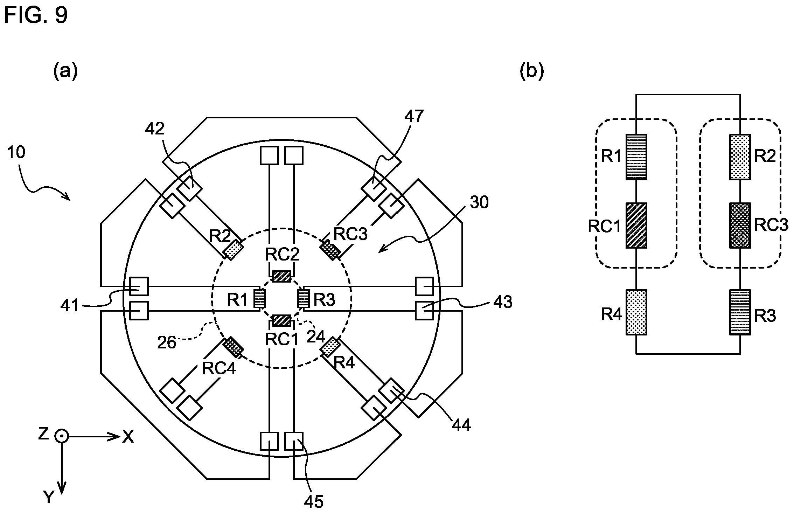

FIG. 9 is a conceptual diagram illustrating another configuration example (seventh configuration example) of the Wheatstone bridge formed in the pressure sensor 10. FIG. 9A illustrates a connection state of the electrode portions 41-48, and FIG. 9B illustrates a circuit formed by the resistor group 30 in the connection state shown in FIG. 9A.

In the seventh configuration example, as shown in FIG. 9A, the main electrode portion 41 and the main electrode portion 42, the main electrode portion 42 and the correction electrode portion 47, the correction electrode portion 47 and the main electrode portion 43, the main electrode portion 43 and the main electrode portion 44, the main electrode portion 44 and the correction electrode portion 45, and the correction electrode portion 45 and the main electrode portion 41 are connected to each other to form a Wheatstone bridge. That is, the Wheatstone bridge in the seventh configuration example is configured by the first and third correction resistors RC1 and RC3 and the first to fourth resistors R1-R4 connected via the correction electrode portions 45 and 47 and the main electrode portions 41-44.

In the Wheatstone bridge of the seventh configuration example, as shown by the dotted line frames in FIG. 9B, the first correction resistor RC1 and the third correction resistor RC3 are connected in series to the first resistor R1 and the second resistor R2, respectively. Such a Wheatstone bridge configuration is adopted, for example, when resistance values of the first to fourth resistors R1-R4 are measured before wiring the main electrodes 41-44 to find that the resistance values of the first and second resistors R1 and R2 are smaller than their target values. In the Wheatstone bridge of the seventh configuration example, the first and third correction resistors RC1 and RC3 are connected in series to the first and second resistors R1 and R2, and the resistance values of the first and second resistors R1 and R2 are thereby corrected to the side where the resistance values of the first and second resistors R1 and R2 increase. Although not shown in FIG. 9B, the bridge circuit shown in FIG. 9A and FIG. 9B is wired to the substrate portion 70 and applied with voltage as in the first configuration example shown in FIG. 3B.

As shown in FIG. 9B, the first and second correction resistors RC1 and RC2 arranged on the first circumference 24 are used when the resistance value of the first resistor R1 (or the third resistor R3) is corrected, and the third and fourth correction resistors RC3 and RC4 arranged on the second circumference 26 are used when the resistance value of the second resistor R2 (or the fourth resistor R4) is corrected. As a result, the balance of the bridge is maintained even if distortion occurs, and the output of the pressure sensor 10 has good linear characteristics.

In the pressure sensor 10, as described with FIG. 1 to FIG. 9, the number of resistors separately arranged on the first circumference 24 and the second circumference 26 on the membrane 22 is five or more, and the resistors are arranged so that a surplus is generated from the minimum four required to configure the Wheatstone bridge. Thus, when a bridge circuit cannot be balanced in a Wheatstone bridge like the first configuration example configured by the first to fourth resistors R1-R4, the pressure sensor 10 can use the first to fourth correction resistors RC1-RC4, which are surplus resistors, to adjust the resistance values of the first to fourth resistors R1-R4. Thus, the pressure sensor 10 can adjust the error of the resistance values due to the manufacturing variation of the first to fourth resistors R1-R4 formed on the membrane 22 and can balance the bridge.

In the pressure sensor 10 shown in FIG. 2, the resistance values of the correction resistors RC1-RC4 are preferably smaller than those of any of the first to fourth resistors R1-R4. In addition, the resistance values of the correction resistors RC1-RC4 are preferably 1/100 to 1/2 of those of the first to fourth resistors R1-R4 to be corrected. In this configuration, the manufacturing variation of the resistance values of the first to fourth resistors R1-R4 can more favorably be corrected by the correction resistors RC1-RC4.

In the pressure sensor 10 shown in FIG. 2, the first to fourth resistors 41-44 are always included in the circuit configuring the Wheatstone bridge, but the pressure sensor 10 is not limited thereto. In a pressure sensor according to another embodiment, for example, a Wheatstone bridge may be configured by freely selecting two or more resistors arranged on the first circumference 24 and two or more resistors arranged on the second circumference 26 from the resistor group 30 formed on the membrane.

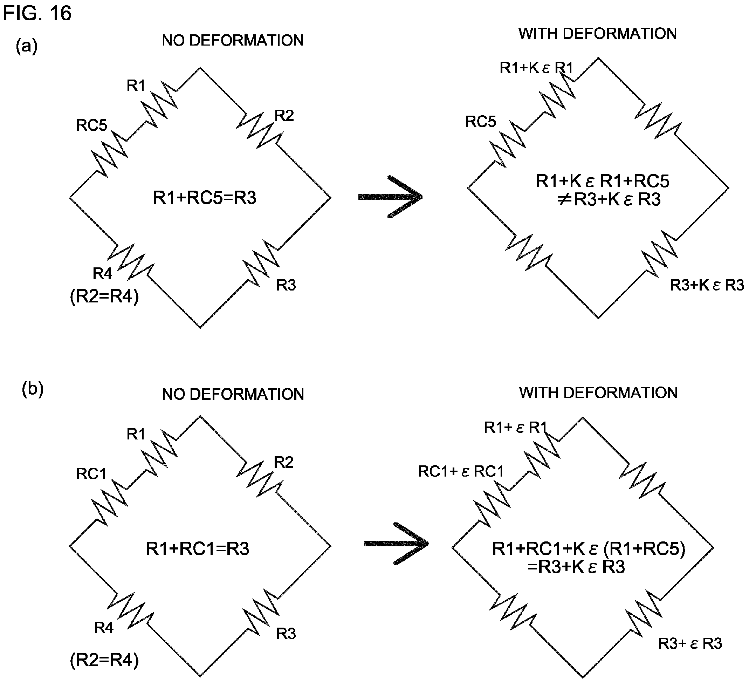

In the pressure sensor 10, as with the first to fourth resistors R1-R4 to be corrected, the correction resistors RC1-RC4 are arranged on the first or second circumference 24 or 26. Thus, even if the bridge circuit is configured to include the correction resistors RC1-RC4, the linear characteristics of the output are favorably maintained. That is, as shown in FIG. 16A, in a conventional technique in which a bridge circuit is formed using a correction resistor RC5 disposed at a position where no distortion occurs, the correction resistor RC5 is not affected by distortion even if the membrane is deformed, and the bridge circuit becomes unbalanced.

In the pressure sensor 10 in which a bridge circuit is formed using the correction resistor RC1 disposed on the first circumference 24, which is the same as the resistor to be corrected (first resistor R1), as in the second configuration example shown in FIG. 4, however, the balance of the bridge circuit is maintained even if the membrane is deformed as shown in FIG. 16B, and the output of the pressure sensor 10 exhibits good linear characteristics.

The number of resistors included in the resistor group 30 shown in FIG. 2 is eight, but the number of resistors is not limited to this, and the resistor group 30 includes at least five resistors (at least one surplus). Preferably, however, the resistor group 30 includes a total of six or more resistors including at least three resistors arranged on the first circumference 24 and at least three resistors arranged on the second circumference 26. This is because the resistance value can be corrected by changing the connection even if there is variation in the resistance values of the resistors on the first circumference 24 or the second circumference 26. When the first to fourth resistors R1-R4 and the correction resistors RC1-RC4 are distinguished in advance, two or more correction resistors including the correction resistors arranged on the first circumference 24 and the correction resistors on the second circumference 26 are preferably arranged on the membrane 22.

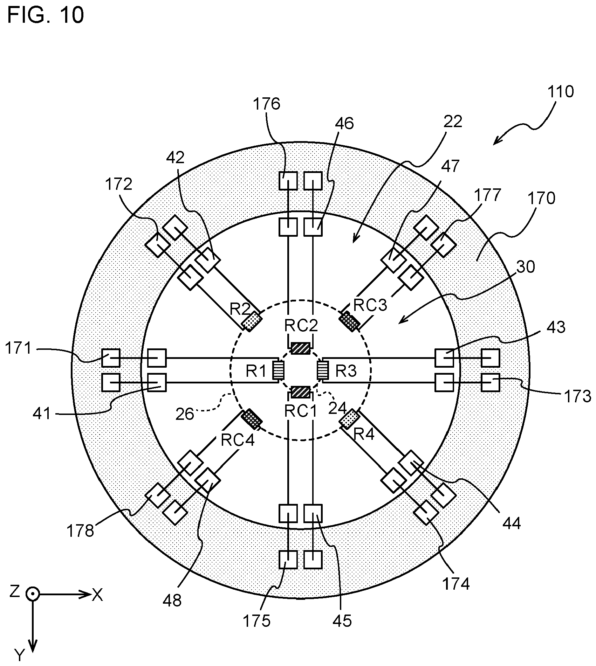

FIG. 10 is a conceptual diagram illustrating an arrangement of the resistor group 30, electrode portions, and a substrate portion 170 in a pressure sensor 110 according to Second Embodiment of the present invention. The pressure sensor 110 according to Second Embodiment is different from the pressure sensor 10 according to First Embodiment in that all of the electrode portions 41-48 on the membrane 22 are connected to the corresponding substrate electrode portions 171-178 of the substrate portion 170, but the other points are similar to those of the pressure sensor 10 according to First Embodiment. In the description of the pressure sensor 110 according to Second Embodiment, only the differences from the pressure sensor 10 according to First Embodiment are described, and the common points are not described.

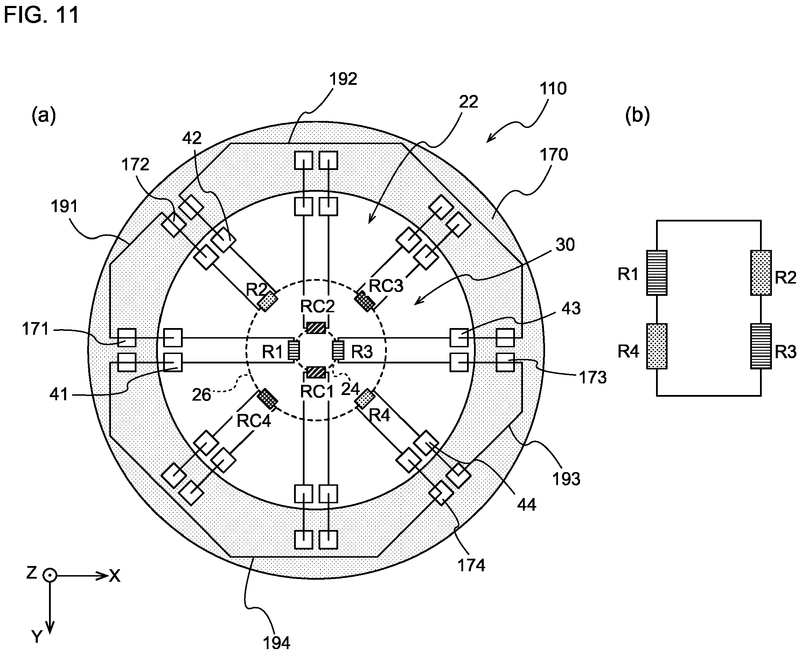

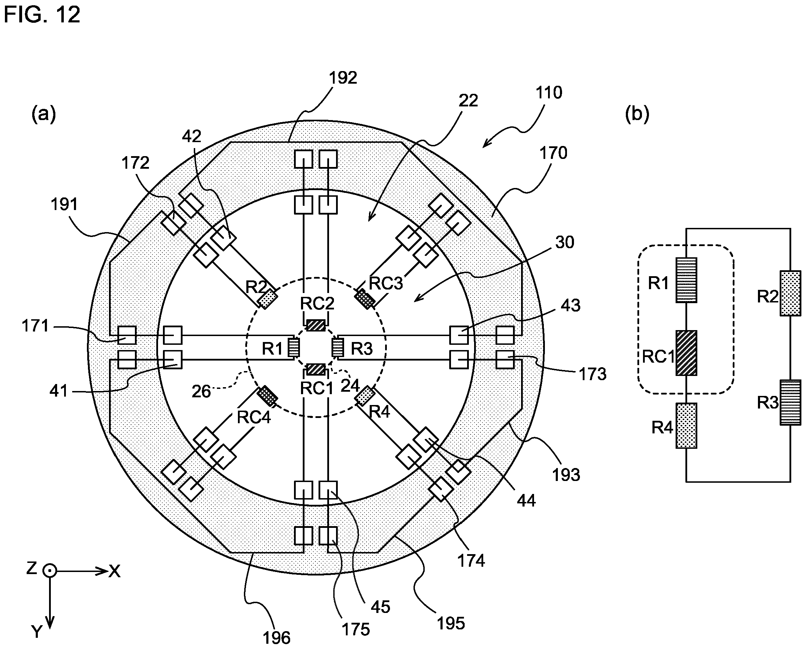

Unlike the pressure sensor 10 shown in FIG. 2, the first to fourth resistors R1-R4 and the first to fourth correction resistors RC1-RC4 included in the resistor group 30 shown in FIG. 10 are not wired to each other on the membrane 22. The first to fourth resistors R1-R4 and the first to fourth correction resistors RC1-RC4 configuring the Wheatstone bridge in the pressure sensor 110 are once connected to substrate electrode portions 171-178 of the substrate portion 170 independent from the membrane 22 and the stem 20 and are further electrically connected via the wiring (see FIG. 11 and FIG. 12) included in the substrate portion 170.

FIG. 11 is a conceptual diagram illustrating a configuration example (eighth configuration example) of the Wheatstone bridge formed in the pressure sensor 110. FIG. 11A illustrates a connection state of the electrode portions 41-48, and FIG. 11B illustrates a circuit formed by the resistor group 30 in the connection state shown in FIG. 11A. In the eighth configuration example, as shown in FIG. 11A, the main electrode portion 41 and the main electrode portion 42, the main electrode portion 42 and the main electrode portion 43, the main electrode portion 43 and the main electrode portion 44, and the main electrode portion 44 and the main electrode portion 41 are electrically connected to each other via wirings 191-194 of the substrate portion 170 to form a Wheatstone bridge. That is, as shown in FIG. 11B, the Wheatstone bridge in the eighth configuration example is configured by the first to fourth resistors R1-R4 without connecting the correction resistors RC1-RC4.

As in the first configuration example shown in FIG. 3, such a Wheatstone bridge configuration is adopted when all of the resistance values of the first to fourth resistors R1-R4 correspond with their target values or slightly deviate from their target values. The wirings 191-194 shown in FIG. 11A are formed by a method of, for example, wire bonding. The eighth configuration example shown in FIG. 11 is similar to the first configuration example shown in FIG. 3 except that the first to fourth resistors R1-R4 configuring the Wheatstone bridge are connected via the wirings 191-194 of the substrate portion 170.

FIG. 12 is a conceptual diagram illustrating a configuration example (ninth configuration example) of the Wheatstone bridge formed in the pressure sensor 110. FIG. 12A illustrates a connection state of the electrode portions 41-48, and FIG. 12B illustrates a circuit formed by the resistor group 30 in the connection state shown in FIG. 12A. In the ninth configuration example, as shown in FIG. 12A, the main electrode portion 41 and the main electrode portion 42, the main electrode portion 42 and the main electrode portion 43, the main electrode portion 43 and the main electrode portion 44, the main electrode portion 44 and the correction electrode portion 45, and the correction electrode portion 45 and the main electrode portion 41 are electrically connected to each other via the wirings 191-193, 195, and 196 of the substrate portion 170 to form a Wheatstone bridge. That is, as shown in FIG. 11B, the Wheatstone bridge in the ninth configuration example is configured by the first correction resistor RC1 and the first to fourth resistors R1-R4.

As shown in FIG. 12A and FIG. 12B, the ninth configuration example is similar to the second configuration example shown in FIG. 4A and FIG. 4B except that the first to fourth resistors R1-R4 configuring the Wheatstone bridge are connected via the wirings 191-194 of the substrate portion 170.

In the pressure sensor 110 according to Second Embodiment, as shown in FIG. 10 to FIG. 12, the resistors configuring the Wheatstone bridge are electrically connected via the wirings 191-196 of the substrate portion 170 independent from the membrane 22. The membrane 22 of the pressure sensor 110 can be downsized by wiring the resistors using the substrate portion 170. In addition, the wiring structure on the membrane 22 can be simplified. In addition, the pressure sensor 110 exhibits the same effect as the pressure sensor 10 according to First Embodiment.

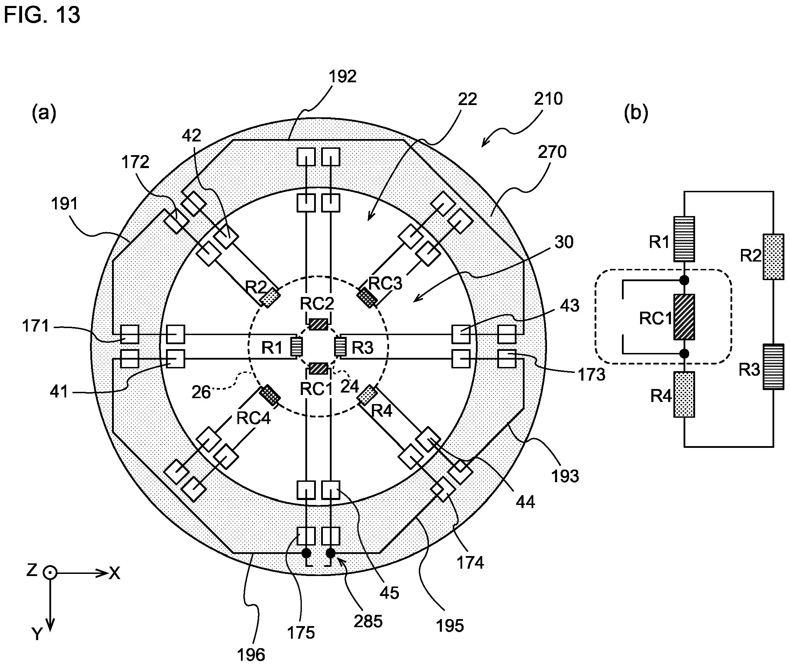

FIG. 13 is a conceptual diagram illustrating a configuration example (10th configuration example) of the Wheatstone bridge formed in a pressure sensor 210 according to Third Embodiment of the present invention. FIG. 13A illustrates a connection state of the electrode portions 41-48, and FIG. 13B illustrates a circuit formed by the resistor group 30 in the connection state shown in FIG. 13A. The pressure sensor 210 according to Third Embodiment is different from the pressure sensor 110 according to Second Embodiment in that a substrate portion 270 includes a jumper switch 285, but the other points are similar to the pressure sensor 110 according to Second Embodiment. In the description of the pressure sensor 210 according to Third Embodiment, only the differences from the pressure sensor 110 according to Second Embodiment are described, and the common points are not described.

In the 10th configuration example, the jumper switch 285 is provided with no jumper plug, and the wiring 195 and the wiring 196 of the substrate portion 270 are not short-circuited. Thus, as in the ninth configuration example shown in FIG. 12, the Wheatstone bridge in the 10th configuration example shown in FIG. 13 is configured by the correction resistor RC1 and the first to fourth resistors R1-R4.

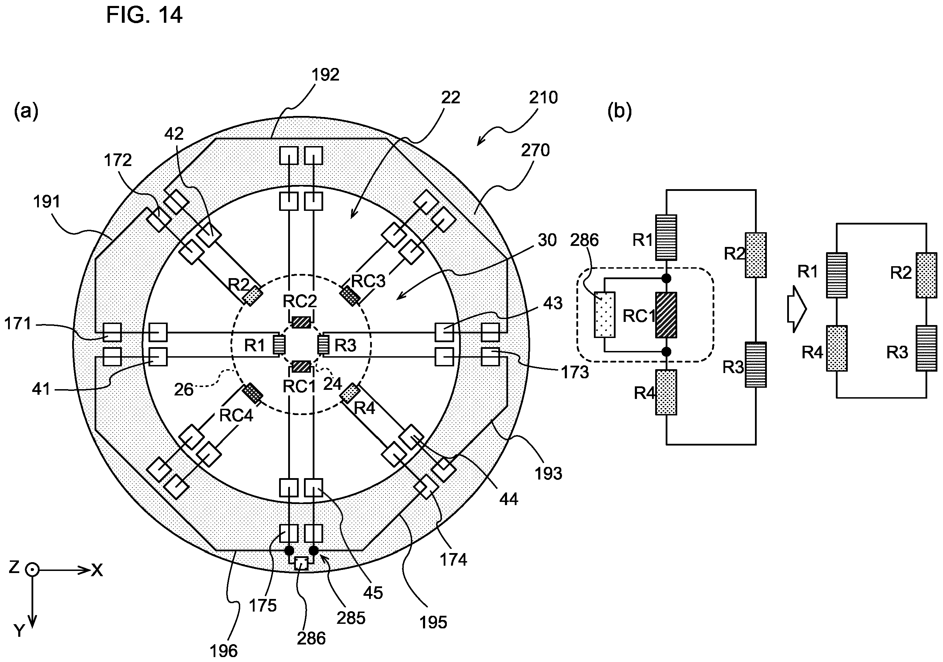

FIG. 14 is a conceptual diagram illustrating a configuration example (11th configuration example) of the Wheatstone bridge formed in the pressure sensor 210. FIG. 14A illustrates a connection state of the electrode portions 41-48, and FIG. 14B illustrates a circuit formed by the resistor group 30 in the connection state shown in FIG. 14A.

In the 11th configuration example, the jumper switch 285 is provided with a jumper plug 286, and the wiring 195 and the wiring 196 of the board portion 270 are short-circuited. Thus, as in the eighth configuration example shown in FIG. 11, the Wheatstone bridge in the 11th configuration example shown in FIG. 14 is configured by the first to fourth resistors R1-R4.

In the pressure sensor 210 according to Third Embodiment, as shown in FIG. 13 and FIG. 14, since the substrate portion 270 includes circuit switching means, such as the jumper switch 285 and the jumper plug 286, the configuration of the Wheatstone bridge can easily be changed by switching the connections between the resistors. Thus, the pressure sensor 210 can easily correct the resistance values. The circuit switching means is not limited to the jumper switch 285 and the jumper plug 286 as shown in FIG. 14, but includes other switching mechanisms, such as a mechanism that switches a circuit by short-circuiting the wirings with solder or other conductive portions and a mechanism that switches a circuit by cutting conductive portions. The wirings 191-193, 195, and 196 of the substrate portion 270 are electrically connected to at least five resistors (the first to fourth resistors R1-R4 and the first correction resistor RC1) included in the resistor group 30.

The pressure sensor 210 can change the configuration of the Wheatstone bridge included in the pressure sensor 210 according to, for example, the operating conditions by attaching or detaching the jumper plug 286 to or from the jumper switch 285. In addition, the pressure sensor 210 exhibits the same effect as the pressure sensor 110 according to Second Embodiment.

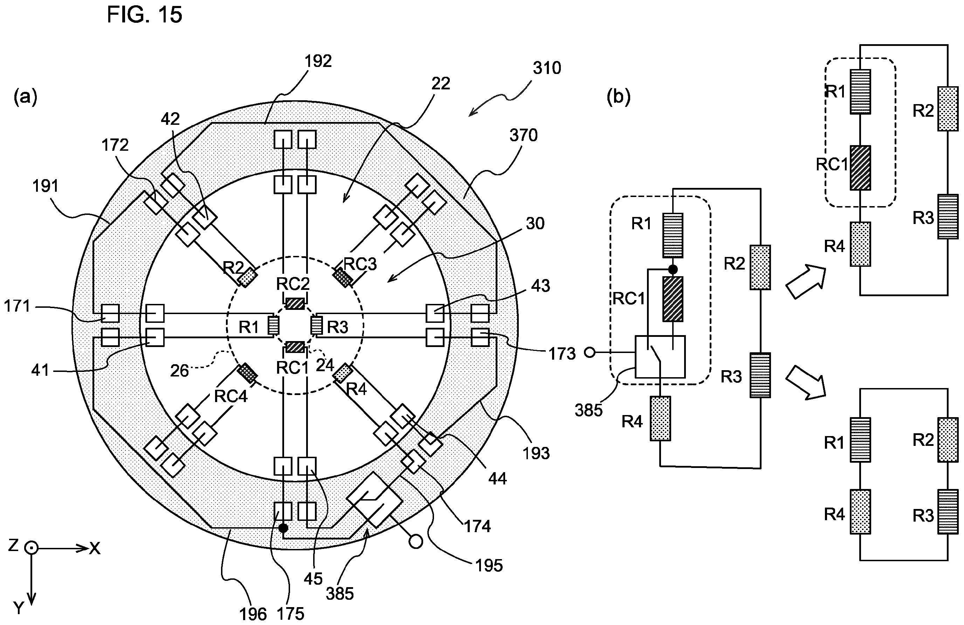

FIG. 15 is a conceptual diagram illustrating a configuration example (12th configuration example and 13th configuration example) of the Wheatstone bridge formed in a pressure sensor 310 according to Fourth Embodiment of the present invention. FIG. 15A illustrates a connection state of the electrode portions 41-48, and FIG. 15B illustrates a circuit formed by the resistor group 30 in the connection state shown in FIG. 15A. The pressure sensor 310 according to Fourth Embodiment is different from the pressure sensor 110 according to Second Embodiment in that a substrate portion 370 includes a switch 385 switched by a control signal from a control unit, but the other points are the same as the pressure sensor 110 according to Second Embodiment. In the description of the pressure sensor 310 according to Fourth Embodiment, only the differences from the pressure sensor 110 according to Second Embodiment are described, and the common points are not described.

As shown in FIG. 15, the switch 385 of the substrate portion 370 can switch between a state in which the wiring 195 and the wiring 196 of the substrate portion 370 are not short-circuited and a state in which the wiring 195 and the wiring 196 are short-circuited. When the wiring 195 and the wiring 196 are not short-circuited by controlling the switch 385 of the substrate portion 370, as shown in the upper right of FIG. 15B, the pressure sensor 310 configures a Wheatstone bridge by the first correction resistor RC1 and the first to fourth resistors R1-R4 (12th configuration example).

On the other hand, when the wiring 195 and the wiring 196 are short-circuited by controlling the switch 385 of the substrate portion 370, as shown in the lower right of FIG. 15B, the pressure sensor 310 configures a Wheatstone bridge by the first to fourth resistors R1-R4 (13th configuration example). In the pressure sensor 310 according to Fourth Embodiment, since the substrate portion 370 includes the switch 385 switched by a signal from a control unit, the configuration of the Wheatstone bridge can easily be changed. Thus, the pressure sensor 310 can easily correct the resistance values. The wirings 191-193, 195, and 196 of the substrate portion 370 are electrically connected to at least five resistors (the first to fourth resistors R1-R4 and the first correction resistor RC1) included in the resistor group 30.

The pressure sensor 310 can automatically change the configuration of the Wheatstone bridge included in the pressure sensor 310 according to, for example, the operating conditions by switching the switch 385 based on a signal from a control unit. In addition, the pressure sensor 310 exhibits the same effect as the pressure sensor 110 according to Second Embodiment.

As described above, the pressure sensor according to the present invention is described with reference to embodiments, but the present invention is not limited to the embodiments and, needless to say, may include many other embodiments and modifications. For example, the shape and fixation structure of the stem 20 shown in FIG. 1 is only an example, and the pressure sensor of the present invention can adopt any other shapes and fixation structures in which the membrane is appropriately deformed according to pressure.

### Explanation of References

- 10: pressure sensor
- 12: connection member
- 12a: screw groove
- 12b: passage
- 14: holding member
- 20: stem
- 22a: inner surface
- 22b: outer surface
- 22: membrane
- 24: first circumference
- 26: second circumference
- 30: resistor group
- R1: first resistor
- R2: second resistor
- R3: third resistor
- R4: fourth resistor
- RC1-RC4: correction resistor
- 41-44: main electrode portion
- 45-48: correction electrode portion
- 171-178: substrate electrode portion
- 191-196: wiring
- 70: substrate portion
- 285: jumper switch
- 286: jumper plug
- 385: switch

## Claims

1. A pressure sensor comprising:
a membrane configured to produce strain corresponding to pressure; and
a resistor group including at least five resistors separately arranged at a first strain position where a predetermined strain characteristic occurs in the membrane and a second strain position where a strain characteristic different from that at the first strain position occurs and configured to detect strain,
wherein the membrane is provided with a plurality of electrode portions connected to the resistor group, and
a Wheatstone bridge is configured by electrically connecting a total of four or more resistors including at least two resistors arranged at the first strain position and at least two resistors arranged at the second strain position among the resistors included in the resistor group via the electrode portions.

2. The pressure sensor according to claim 1, wherein at least two electrode portions are provided for each of the resistors included in the resistor group.

3. The pressure sensor according to claim 1 or 2, comprising a substrate portion independent from the membrane,
wherein the resistors configuring the Wheatstone bridge are electrically connected via a wiring included in the substrate portion.

4. The pressure sensor according to claim 3, wherein
the wiring is electrically connected to at least five resistors included in the resistor group, and
the substrate portion includes a switch capable of switching connections between the resistors.

5. The pressure sensor according to any of claims 1 to 4, wherein the resistor group includes a total of six or more resistors including at least three resistors arranged at the first strain position and at least three resistors arranged at the second strain position.

6. A pressure sensor comprising:
a membrane configured to produce deformation corresponding to pressure;
a first resistor and a third resistor arranged at a first strain position where a predetermined strain characteristic occurs in the membrane and configured to detect strain;
a second resistor and a fourth resistor arranged at a second strain position where a strain characteristic different from that at the first strain position occurs in the membrane and configured to detect strain;
a correction resistor disposed at the first strain position or the second strain position and configured to detect strain;
a pair of correction electrode portions arranged in the membrane and connected to the correction resistor; and
at least a pair of main electrode portions arranged in the membrane and connected to the first to fourth resistors,
wherein a Wheatstone bridge is configured by the correction resistor and the first to fourth resistors connected via the correction electrode portions and the main electrode portions or by the first to fourth resistors without connecting the correction resistor.

7. The pressure sensor according to claim 6, wherein a resistance value of the correction resistor is smaller than that of any of the first to fourth resistors.

8. The pressure sensor according to claim 6 or 7, comprising a total of two or more correction resistors including the correction resistor disposed at the first strain position and the correction resistor disposed at the second strain position.
